Europäisches Patentamt

European Patent Office

Office européen des brevets

(19)

(11) Publication number: **0 015 728**
**B1**

(12) **EUROPEAN PATENT SPECIFICATION**

(45) Date of publication of patent specification: **09.05.84**

(51) Int. Cl.³: **F 25 D 3/10, F 17 C 3/08**

(21) Application number: **80300610.5**

(22) Date of filing: **29.02.80**

(54) Cryostat.

(30) Priority: **02.03.79 US 17009**

(43) Date of publication of application:
**17.09.80 Bulletin 80/19**

(45) Publication of the grant of the patent:
**09.05.84 Bulletin 84/19**

(84) Designated Contracting States:
**DE FR GB**

(56) References cited:
**DE - A - 2 423 301**
**US - A - 3 360 955**

**PROCEEDINGS OF THE SEVENTH INTERNATIONAL CRYOGENIC ENGINEERING CONFERENCE, vol. 7, 4-7 July 1978, London, GB, J. YAMAMOTO et al.: "Low evaporation Helium Cryostat with a refrigerator", pages 593-598**

(73) Proprietor: **AIR PRODUCTS AND CHEMICALS, INC.**
**P.O. Box 538**
**Allentown, Pennsylvania 18105 (US)**

(72) Inventor: **Longsworth, Ralph Cady**
**2521 Green Acres Drive**
**Allentown Pennsylvania 18103 (US)**

(74) Representative: **Raynor, John et al,**
**W.H.Beck, Greener & Co 7 Stone Buildings Lincoln's Inn**
**London WC2A 3SZ (GB)**

(56) References cited:
**IBM TECHNICAL DISCLOSURE BULLETIN, vol. 18, no. 4, September 1975, New York, US, V.L. RIDEOUT: "Closed-cycle liquid nitrogen refrigeration system for low-temperature computer operation"**

Courier Press, Leamington Spa, England.

## Description

This invention relates to cryostats.

One of the problems encountered with cryostats is the maintenance of an inventory of liquid helium which has a boiling point of 4.2°K at atmospheric pressure. One method of maintaining the inventory of liquid helium is to provide a continuous supply of gaseous helium which is liquefied to replace that which boils off due to heat infiltrating the cryostat. The venting gaseous helium can be collected and recondensed. In order to do this, the vented helium must be recycled to a refrigeration apparatus which, in turn, produces the liquid helium which is reintroduced into the reservoir. In the case of a superconducting electronic device (e.g. super conducting magnets, super conducting quantum interference devices and Josephson junction devices) access is required to the liquid helium so the device being cooled can be placed in the liquid with electrical leads running from the device to related equipment operating at ambient conditions.

A typical form of cryostat is disclosed, for example, in IBM Technical Disclosure Bulletin, Vol. 18 No. 4, dated September 1975. It can be seen from the drawings accompanying that Bulletin, that the only method of obtaining access to the devices (6 in the drawings) is to dismantle the refrigerator head completely, and thus vent the helium in the cryostat to the atmosphere. This makes it necessary to shut down the cryostat for any access operation.

It is also known to provide a cryostat having heat-shields disposed in a vacuum space, and linked to respective stages of a refrigerator. For example, German Patent Specification No. 2423301 discloses an arrangement in which a three-stage refrigerator is linked to respective heat stations in a vacuum jacket. The device according to this German Patent Specification also has no access passage for obtaining access to the contents of the cryostat. Thus in order to obtain access to the contents of the cryostat, disassembly is necessary.

The use of heat shields is also discussed, for example, in US Patent Specification No. 3360955. This device similarly includes no access passage by which access may be gained to the contents of the cryostat.

The provision of an access passage by means of which access could be gained to the contents of known cryostats of the kind described above is by no means a straightforward task. A simple hatch-type cover will not only expose the contents of the cryostat to ambient air when opened. It will also, even when closed, provide a ready path for heat leakage between the cryostat contents and the environment.

According to the present invention, there is provided a cryostat of the type including a reservoir (14) for receiving and holding a supply of a liquid cryogen (15) and having a vacuum-jacket including a vacuum space, and vacuum-jacketed reservoir having a cover exposed to the ambient atmosphere, and refrigeration means operating on a closed cycle and including means for recondensing cryogen boil-off from the reservoir, characterised in that the cryostat includes an access passage (24, 34) extending across the vacuum jacket, the refrigeration means (42, 43, 44, 46) being disposed within the access passage, in that the refrigeration means has at least two stages (42, 43), each of the said at least two stages (42, 43) being thermally connected to a respective heat station (64, 66) disposed at the respective stages of the said refrigeration means within the access passage, in that first and second radiation shields (60, 62) are disposed in the vacuum space of the vacuum-jacket and thermally connected but not mechanically secured to the said first and second heat stations (64, 66) respectively, such that the respective stages of the refrigeration means (42, 43) are arranged to cool respective heat stations (64, 66) and the said radiation shields (60, 62) to minimise heat infiltration into the cryogenic liquid via the access passage and via the vacuum space respectively, the means for recondensing cryogen boil-off from the reservoir including a heat exchanger having a Joule-Thompson valve, provided below the second stage of the refrigeration means and in that means (70, 80, 84) are provided to permit removal of the refrigeration means from the access passage on removal of the cover without opening the reservoir to the ambient atmosphere.

Preferably, said removal means includes a flexible sleeve which is connected to said vacuum jacket and surrounds said refrigerator as it is withdrawn from said access passage; means to seal said flexible sleeve between said refrigerator and said access passage; and means to remove said refrigerator from said flexible sleeve.

Alternatively, said removal means includes a rigid sleeve which mates with said access passage and can receive said refrigerator in sliding engagement therewith and a gate valve to isolate said refrigerator from said reservoir when said refrigerator is inside said sleeve.

Preferably, the refrigerator has at least two stages, two separate and distinct thermally conductive radiation shields are disposed in said vacuum jacket and are thermally coupled to respective ones of said two stages, and said means comprises two separate and distinct heat stations which are thermally coupled to respective ones of said thermally conductive radiation shields.

For a better understanding of the invention reference will now be made, by way of example, to the accompanying drawings, in which:

Figure 1 is a schematic representation of an apparatus according to the present invention;

Figure 2 is a fragmentary schematic diagram of the apparatus of Figure 1 illustrating the cryogenic refrigerator being removed; and

Figure 3 shows an alternative arrangement for removing the cryogenic refrigerator.

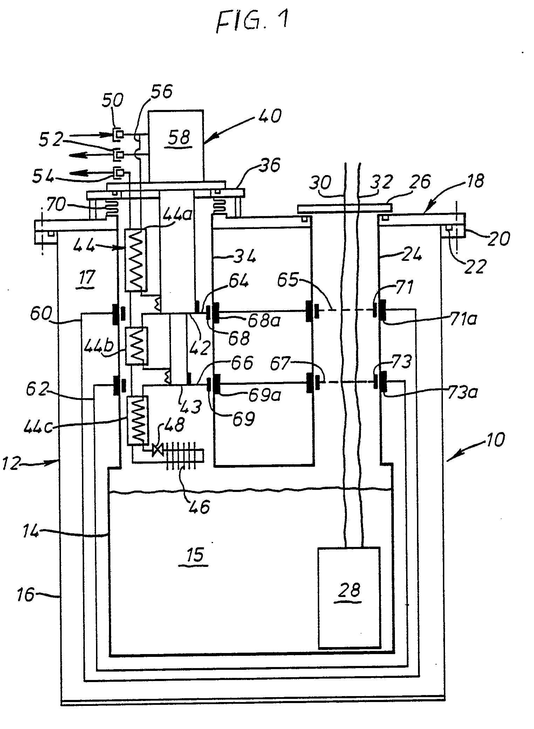

Referring to Figure 1, there is shown a cryostat 10 which includes a vacuum housing 12 having an inner shell 14 defining a reservoir for storing a quantity of cryogenic liquid 15 and an outer shell 16. The space 17 between the inner shell 14 and the outer shell 16 is evacuated. The vacuum housing 12 is closed by a warm flange 18 which is secured to a flange 20 on the vacuum housing 12. An O-ring seal 22 is positioned between the warm flange 18 and the flange 20 as shown.

Between the inner shell 14 defining the reservoir containing the cryogenic liquid 15 and the warm flange 18, the cryostat 10 includes an access passage 24 closed by a vacuum tight closure 26. Access passage 24 provides a means for lowering a device 28 to be cooled (e.g. a superconducting electronic device) into the cryogenic liquid 15. Projecting from device 28 are a pair of electrical leads 30, 32 for connecting the device 28 to related electronic equipment (not shown). While it is possible to construct a cryostat with single access passage 24, the preferred structure shown includes a second access passage 34 between the warm flange 18 and the inner shell 14 defining the liquid cryogen reservoir. Second access passage 34 is sealed in vacuum tight relationship to the warm flange 18 and includes a refrigerator removal flange 36 upon which is mounted a cryogenic refrigerator identified generally by numeral 40.

Cryogenic refrigerator 40 has three stages which operate at 65°K (−208.1°C), 15°K (−258.1°C), and 4.2°K (−268.9°C) respectively. This cryogenic refrigerator is manufactured and sold by Air Products and Chemicals, Inc. and designated as a DISPLEX Model CS-308 Closed Cycle Helium Refrigeration System. It is described in US Patent Specification No. 3,620,029 and includes a first refrigeration stage 42 (65°K), a second refrigeration stage 43 (15°K), a third refrigeration stage 46 (4.2°K), a multi-stage heat exchanger 44 consisting of heat exchanger 44a, 44b and 44c, and a Joule-Thompson valve 48. Cryogenic refrigerator 40 is adapted to utilize helium as a working fluid which is introduced under high pressure through a coupling 50. Exhaust line couplings 52 and 54 are provided to collect returning warm helium for recompression and reintroduction to cryogenic refrigerator 40 via coupling 50. A branch conduit is provided so that the high pressure helium can be introduced simultaneously to the displacer expander section 58 of cryogenic refrigerator 40 and to the multi-stage heat exchanger 44 of cryogenic refrigerator 40 via branch 56. The first stage 42 of the cryogenic refrigerator 40 is thermally connected to heat exchanger 44a. Refrigeration produced at the first stage is used in heat exchanger 44a to precool the incoming high pressure fluid in heat exchanger 44a.

Similarly, heat exchanger 44b is thermally connected to the second stage 43 of the cryogenic refrigerator 40 to further precool the incoming high pressure gas. Finally, the high pressure helium exiting heat exchanger 44b is further cooled in heat exchanger 44c and expanded through Joule-Thompson valve 48 to provide a temperature of 4.2°K (−268.9°C) at third stage 46.

Included within the space 17 between the inner and outer shells 14 and 16 of the vacuum housing 12 are a first radiation shield 60 and a second radiation shield 62. The first radiation shield 60 is thermally connected to the first stage 42 and second radiation shield 62 is thermally connected to the second stage 43 via heat stations 64, 65 and 66, 67 respectively. The radiation shields 60, 62 and the heat stations 64, 65, 66, 67 are fabricated from materials having high thermal conductivity such as aluminium or copper, whereas the access passages 24 and 34 are constructed of materials having low thermal conductivity such as stainless steel or fiber-glass.

In operation, when an inventory of liquid helium (15) is introduced into the reservoir defined by inner wall 14, some of the liquid helium begins to boil off and helium gas fills the access passages 24 and 34 and becomes thermally stratified. Thus, there is created a temperature gradient from approximately 4.2°K in the liquid helium to ambient at the warm flange 18. Cover plate 26, and refrigerator removal flange 36 seal the access passages 24 and 34, so that the helium cannot vent to atmosphere and air cannot leak in. Pressure within the cryostat 10 and the temperature of the liquid helium 15 is determined by the temperature of the third stage 46. For example, the Model CS-308 refrigerator can maintain pressures in the range of about 7 psia (48 KPa) to about 20 psia (138 Kpa), which corresponds to liquid helium temperatures of between 3.5°K (−269.6°C) and 4.5°K (−268.6°C).

Heat station 64 comprises a horizontal plate that terminates in a band 68 which is in close physical proximity to a band 68a on the inside of access passage 34. The gap between the bands 68, 68a and similar bands 69, 69a associated with heat station 66 contains helium gas which is in the access passage 34 and serves to transport heat from one band to the other without the need of mechanical coupling. A band with a diameter of 150 mm, width of 25 mm, and gap of 0.1 mm can conduct 10 watts of heat at 65°K (−208.1°C) with a temperature drop of 1.5°K (1.5°C). Similar bands 71, 71a and 73, 73a are located within the access passage 24 where they intercept heat leak in the stratified helium and lead wires 30, 32. Heat is conducted from the access passage 24 to the access passage 34 through thermal straps formed by the radiation shields (60, 62). The horizontal heat stations (64, 66, 65, 67) in both access passages 24, 34 respectively serve to establish the temperature in the helium gas. They also help block thermal radiation in the access passages. Radiation and convective thermal losses in the access passages 24, 34 may be further reduced by packing the access passages with a foam or glass fiber type insulation (not shown). In order to minimize convective heat losses within the access tube 34, it is essential to match the temperature profile in each heat exchanger (44$a$, 44$b$, 44$c$) with the temperature profile in the displacer expander section 58 and the access passage 34. Thus, it is preferable to design the heat exchangers such that heat exchanger 44$a$ is positioned between the warm flange 18 and the first heat station 64, the second heat exchanger 44$b$ is positioned between the first and second heat stations 64, 66 and the Joule-Thompson heat exchanger 44$c$ is positioned between the second heat exchanger 44$b$ and the liquid helium 15. The warm end of each heat exchanger 44$a$, 44$b$, 44$c$ is positioned closest to the warm flange 18 of the cryostat 10.

When the displacer expander section 58 is turned off, helium will begin to boil off and will rise through one or both of the access passages 24, 34 depending upon where a vent valve or valves (not shown) are located. One liquid liter of helium absorbs about .73 watt hours (WHr) of heat as it vaporizes at atmospheric pressure and about 1 WHr for every 5°K (5°C) rise in temperature. The venting helium cools the heat stations and thus minimizes the boil-off rate.

Having the refrigerator 40 mounted in an access passage 34 results in the refrigerator becoming thermally disconnected when it shuts off in a sense that there is no direct heat path to the liquid helium and the refrigeration in the boil-off helium can be used effectively to intercept heat leak.

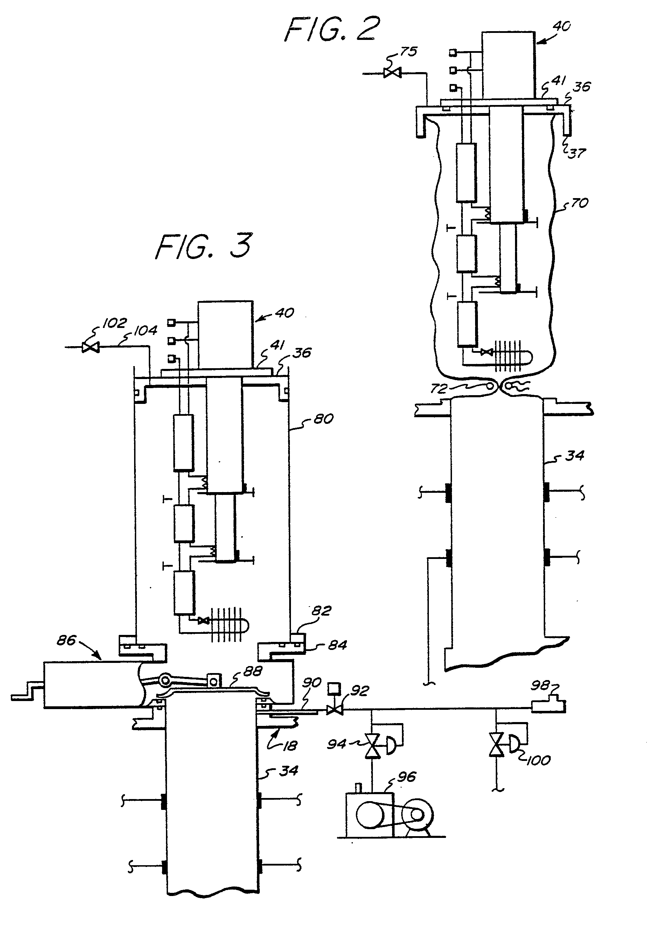

Pressure and temperature control of the helium is maintained by an auxiliary system such as shown in Figure 3, as will hereinafter be more fully described, during the periods when the refrigerator is off and when it is being replaced. In the case of operation at atmospheric pressure, a simple relief valve is all that is needed.

Helium boil-off rate during periods when the refrigerator is off and is being serviced would typically be less than 1 liquid liter per hour for a Model CS-308 refrigerator, thus a surplus helium inventory of 30 liters of liquid would suffice to continue operation for 24 hours and cool down a warm replacement refrigerator. After a new unit is operating, it can be used to liquefy make-up gas over a period of one week (typically) to replenish the liquid that is lost.

Figure 2 shows an apparatus for removing the refrigerator 40 without exposing the liquid cryogen to the atmosphere. In particular, the apparatus of Figure 2 is ideally suited for units operating at atmospheric pressure. In addition to the refrigerator 40 mounted on flange 36, the underside of flange 36 includes a flexible sleeve 70 which may be of plastic, neoprene rubber, rubberized fabric or the like and may either be tubular or accordion pleated in shape such as shown in Figure 1. In normal operation the sleeve 70 is folded around the top of the refrigerator flange 36 as shown in Figure 1. It is preferable to have the sleeve 70 surrounded by a sealed housing filled with helium so that air does not infuse through the material and into the helium space such as shown in Figure 1 by having a depending flange 37 on the refrigerator flange 36 and suitable sealing means (not shown).

In order to remove the refrigerator from access passage 34, it is simply withdrawn so that it becomes surrounded by flexible sleeve 70 as shown in Figure 2. As the refrigerator 40 is lifted, helium gas is supplied through a purge-vent valve 75 in order to keep the flexible sleeve 70 somewhat inflated and out of contact with cold refrigerator 40. Once the refrigerator 40 is lifted, the flexible removal sleeve 70 can be tied at its base by a closure 72 to form a gas tight seal. If the seal is not perfect a flow of purge gas can be maintained. The refrigerator 40 can then be lifted out of the sleeve 70, breaking the gas seal between the refrigerator removal flange 36 and the refrigerator flange 41. The refrigerator 40 may be removed from the sleeve while it is still cold and taken away for service to any convenient location. The sleeve 70 is then folded with the sealing means 72 in place so that the refrigerator removal flange 36 is again caused to mate with the warm flange 18 of cryostat 10.

To install a warm refrigerator, the procedure is essentially reversed. First, the refrigerator removal flange 36 is removed from warm flange 18 and the sleeve extended. The refrigerator 40 is put into the extended flexible sleeve and a gas seal is made between the refrigerator flange 41 and the refrigerator removal flange 36. The purge valve 75 on the removal sleeve flange 36 is then used to inflate the flexible sleeve 70 several times to purge out most of the air and replace it with helium. The sealing means 72 is then released and the refrigerator lowered into the access passage 34. Lowering refrigerator 40 will result in helium venting through the relief valve 75 due to displacement of helium from the sleeve and venting of cold helium that is warmed by the warm refrigerator. Cold helium flowing up past the refrigerator 40 as it is inserted will cool it down with the coldest gas coming into contact first with the part of the refrigerator that will be coldest when it is operating. Most efficient utilization of the cold helium is obtained if the refrigerator 40 is lowered during a period of 10 to 15 minutes at a rate that results in the helium vent rate being nearly constant. After refrigerator 40 is completely inserted, it is turned on.

Referring to Figure 3, an alternate method of removing the refrigerator from the cryostat 10 includes a rigid removable sleeve 80 mated by suitable flanges 82, 84 in gas tight relationship to a gate valve assembly 86. Also shown in Figure 3 an auxiliary pressure control system is provided to maintain the liquid helium at a pressure above or below atmospheric while the refrigerator 40 is turned off, being removed, serviced and reinstalled. The auxiliary pressure control system includes a conduit 90 communicating with access passage 34 which in turn is connected through a first control valve 92 and subsequently by suitable conduits to a second control valve 94 and vacuum pump 96. This system also includes a pressure relief valve 98 and a flow control valve 100 controlling flow from a helium source (not shown).

With the apparatus of Figure 3, the gate valve 86 with valve element 88 normally in the retracted position are an integral part of the cryostat 10 and affixed to warm flange 18 by suitable sealing means. Rigid sleeve 80 is removably attached to flange 84 of the valve assembly 86. Refrigerator removal flange 36 is adapted to be held in sealing engagement with flange 84 of valve assembly 86 and is also adapted to be slidingly, sealingly engaged with rigid sleeve 80. In operation, when the refrigerator is turned off and is to be withdrawn it is removed by withdrawing it upwardly into sleeve 80 as at the same time helium gas is added to rigid sleeve 80 through valve 100 and conduit 90. When the refrigerator 40 is fully withdrawn, the valve element 88 is moved into sealing engagement with access passage 34 thus acting in the same manner as the seal 72 of the apparatus of Figure 2. The refrigerator 40 can then be removed from sleeve 80 and serviced as needed. One major difference between the apparatus of Figure 2 and Figure 3 is that when the refrigerator is replaced, the sleeve can be evacuated by means of conduit 104 and valve 102 to remove air rather than using a purge technique as disclosed in relation to the apparatus of Figure 2.

While the refrigeration apparatus disclosed in connection with the foregoing description utilizes a modified Solvay cycle other cryogenic refrigerators operating on different cycles such as the Claude Cycle, Sterling Cycle or Gifford-McMahon Cycle may be employed.

As set out above, the cryostat may have a working fluid of hydrogen, neon, or any other cryogen that is normally gaseous at atmospheric temperature and pressure.

There may be only one access passage or there may be more than two with the cryostat. As set out above, thermal coupling between the refrigerator and the access passage can be by mechanical means or utilize a technique of refrigeration by extended surface such as disclosed in US Patent 3,894,403.

It is also possible that after the refrigerator is withdrawn from the flexible sleeve 70 or the rigid sleeve 80, a foam plug can be inserted and the access passage purged to further reduce liquid cryogen boil-off while the refrigerator is being serviced.

## Claims

1. A cryostat of the type including a reservoir (14) for receiving and holding a supply of a liquid cryogen (15) and having a vacuum-jacket including a vacuum space, the vacuum-jacketed reservoir having a cover exposed to the ambient atmosphere, and refrigeration means operating on a closed cycle and including means for recondensing cryogen boil-off from the reservoir, characterised in that the cryostat includes an access passage (24, 34) extending across the vacuum jacket, the refrigeration means (42, 43, 44, 46) being disposed within the access passage, in that the refrigeration means has at least two stages (42, 43), each of the said at least two stages (42, 43) being thermally connected to a respective heat station (64, 66) disposed at the respective stages of the said refrigeration means within the access passage, in that first and second radiation shields (60, 62) are disposed in the vacuum space of the vacuum-jacket and thermally connected but not mechanically secured to the said first and second heat stations (64, 66) respectively, such that the respective stages of the refrigeration means (42, 43) are arranged to cool respective heat stations (64, 66) and the said radiation shields (60, 62) to minimise heat infiltration into the cryogenic liquid via the access passage and via the vacuum space respectively, the means for recondensing cryogen boil-off from the reservoir including a heat exchanger having a Joule-Thompson valve, provided below the second stage of the refrigeration means and in that means (70, 80, 84) are provided to permit removal of the refrigeration means from the access passage on removal of the cover without opening the reservoir to the ambient atmosphere.

2. A cryostat according to Claim 1 , characterised in that means for permitting removal of the refrigeration means includes a flexible sleeve for surrounding the refrigeration means as it is withdrawn from the access passage, which extends the access passage until the refrigeration means is removed from the access passage, and means to seal the flexible sleeve between the refrigeration means and the access passage.

3. A cryostat according to Claim 1, characterised in that the means for permitting removal of the refrigeration means includes a rigid sleeve adapted to mate with the access passage, and receive the refrigeration means slidably sealed to the sleeve, and a gate valve interpose between the sleeve and the access passage to seal the sleeve from the cryogen when the refrigeration means is inside the sleeve.

## Patentansprüche

1. Ein Kryostat des Typs, der einen Speicher (14) zur Aufnahme und Lagerung eines Vorrats einer flüssigen Kältemischung (15) mit einem Vakuum-Mantel mit einem Vakuum-Raum umfaßt, wobei der vakuum-ummantelte Speicher eine Abdeckung aufweist, die der Umgebungsatmosphäre ausgesetzt ist, und eine Kälteeinrichtung, die als geschlossener Kreislauf arbeitet und Mittel zur Wiederkondensierung der aus dem Speicher ausgedampften Kältemischung umfaßt, dadurch gekennzeichnet, daß der Kryostat einen Zugangs-Durchgang (24, 34) aufweist, der sich durch den Vakuum-Mantel erstreckt, wobei die Kälteeinrichtung (42, 43, 44, 46) innerhalb dieses Zugangs-Durchgangs angeordnet ist, daß die Kälteeinrichtung wenigstens zwei Stufen (42, 43) aufweist, wobei jede der mindestens zwei Stufen (42, 43) thermisch mit einer entsprechenden Wärmestation (64, 66) verbunden ist, die auf der entsprechenden Stufe der Kälteeinrichtung innerhalb des Zugangs-Durchgangs angeordnet ist, daß im Vakuum-Raum des Vakuum-Mantels erste und zweite Strahlungs-Abschirmungen (60, 62) angeordnet und thermisch mit der ersten bzw. zweiten Wärmestation (64, 66) verbunden, jedoch nicht mechanisch an diesen befestigt sind, so daß die entsprechenden Stufen Kälteeinrichtung (42, 43) so angeordnet sind, daß sie die entsprechenden Wärmestationen (64, 66) und die Strahlungs-Abschirmungen (60, 62) kühlen und das Eindringen von Wärme in die flüssige Kältemischung durch den Zugangs-Durchgang bzw. den Vakuum-Raum minimal machen, wobei die Mittel zur Wiederkondensierung der aus dem Speicher ausgedampften Kältemischung einen Wärmeaustauscher mit einem Joule-Thompson-Ventil umfassen, der unter der zweiten Stufe der Kälteeinrichtung vorgesehen ist, und daß Mittel (70, 80, 84) vorgesehen sind, die die Entfernung der Kälteeinrichtung aus dem Zugangs-Durchgang unter Entfernung der Abdeckung ermöglichen, ohne daß der Speicher zur Umgebungsatmosphäre geöffnet wird.

2. Ein Kryostat nach Anspruch 1, bei dem die Mittel zur Ermöglichung der Entfernung der Kälteeinrichtung eine flexible Hülse umfassen, die die Kälteeinrichtung umgibt, wenn diese aus dem Zugangs-Durchgang herausgezogen wird, und die den Zugangs-Durchgang verlängert, bis die Kälteeinrichtung aus dem Zugangs-Durchgang entfernt ist, sowie Mittel zur Abdichtung der flexiblen Hülse zwischen der Kälteeinrichtung und dem Zugangs-Durchgang.

3. Ein Kryostat nach Anspruch 1, bei dem die Mittel zur Ermöglichung der Entfernung der Kälteeinrichtung eine steife Hülse umfassen, die so ausgelegt ist, daß sie genau in den Zugangs-Durchgang eingepaßt ist und die Kälteeinrichtung gleitend abgedichtet innerhalb der Hülse aufnimmt, sowie ein Absperr-Ventil, das zwischen der Hülse und dem Zugangs-Durchgang eingeschoben ist und die Hülse gegen die Kältemischung abdichtet, wenn sich die Kälteeinrichtung innerhalb der Hülse befindet.

**Revendications**

1. Cryostat du type comportant un réservoir (14) pour recevoir et retenir une alimentation d'un cryogène liquide (15) et possédant une enveloppe sous vide comportant un espace sous vide, le réservoir à enveloppe sous vide comportant un couvercle exposé à l'atmosphère ambiante, et des moyens de réfrigération fonctionnant en cycle fermé et comprenant des moyens pour recondenser du cryogène qui s'est évaporé du réservoir par ébullition, caractérisé en ce que le cryostat comporte un passage d'accès (24, 34) s'étendant en travers de l'enveloppe sous vide, les moyens de réfrigération (42, 43, 44, 46) étant disposés à l'intérieur du passage d'accès, en ce que les moyens de réfrigération comportent au moins deux étages (42, 43), chacun de ces au moins deux étages (42, 43) étant couplé thermiquement à un poste de chaleur respectif (64, 66) disposé au niveau des étages respectifs desdits moyens de réfrigération à l'intérieur du passage d'accès, en ce que des premier et second écrans absorbant le rayonnement (60, 62) sont disposés dans l'espace sous vide de l'enveloppe sous vide et sont couplés thermiquement mais non fixés mécaniquement respectivement auxdits premier et second postes de chaleur (64, 66), de manière que les étages respectifs des moyens de réfrigération (42, 43) soient agencés pour refroidir des postes de chaleur respectifs (64, 66) et lesdits écrans absorbant le rayonnement (60, 62) pour minimiser l'infiltration de chaleur dans le liquide cryogénique respectivement par l'intermédiaire du passage d'accès et par l'intermédiaire de l'espace sous vide, les moyens pour recondenser le cryogène qui s'est évaporé du réservoir par ébullition comprenant un échangeur de chaleur comportant une soupape de Joule-Thomson, prévue en dessous du second étage des moyens de réfrigération, et en ce que des moyens (70, 80, 84) sont prévus pour permettre l'enlèvement des moyens de réfrigération du passage d'accès lors de l'enlèvement du couvercle sans ouvrir le réservoir à l'atmosphère ambiante.

2. Cryostat suivant la revendication 1, dans lequel les moyens pour permettre l'enlèvement des moyens de réfrigération comprennent un manchon souple pour entourer les moyens de réfrigération lorsqu'ils sont retirés du passage d'accès, qui allonge le passage d'accès jusqu'à ce que les moyens de réfrigération soient enlevés du passage d'accès, et des moyens pour fermer de façon étanche le manchon souple entre les moyens de réfrigération et le passage d'accès.

3. Cryostat suivant la revendication 1, dans lequel les moyens pour permettre l'enlèvement des moyens de réfrigération comprennent un manchon rigide conçu pour s'adapter sur le passage d'accès et reçoivent les moyens de réfrigération de façon coulissante et étanche par

11 · **0 015 728** · 12

rapport au manchon, et un robinet-vanne interposé entre le manchon et le passage d'accès pour fermer de façon étanche le manchon vis-à- vis du cryogène lorsque les moyens de réfrigération sont à l'intérieur du manchon.

FIG. 1

*FIG. 2*

*FIG. 3*